# EUROPÄISCHE PATENTANMELDUNG

(11) **EP 2 963 440 A1**
(43) Veröffentlichungstag der Anmeldung: **06.01.2016**
(21) Anmeldenummer: 15170978.9
(22) Anmeldetag: 08.06.2015
(51) Int. Cl.: G01S 7/03

(54) **MIKROWELLENMODUL**

(30) Priorität: 30.06.2014 DE 102014109120
(71) Anmelder: Krohne Messtechnik GmbH, 47058 Duisburg (DE)
(72) Erfinder: Michael, Gerding, 44805 Bochum (DE); Michael, Deilmann, 45257 Essen (DE); Pohl, Nils, 53340 Meckenheim (DE); Vogt, Michael, 44797 Bochum (DE); Schulz, Christian, 44791 Bochum (DE); Jaeschke, Timo, 45525 Hattingen (DE); Schmits, Christoph, 44149 Dortmund (DE)
(74) Vertreter: Gesthuysen Patent- und Rechtsanwälte

(57) **Zusammenfassung**

Beschrieben und dargestellt ist ein Mikrowellenmodul (1) für ein nach dem Laufzeitverfahren arbeitendes Füllstandmessgerät (2) mit einem Chip (7) zum Erzeugen und/oder Empfangen von Mikrowellensignalen und einem Trägerelement (8).

Der Erfindung liegt die Aufgabe zugrunde, ein möglichst vorteilhaftes Mikrowellenmodul vorzuschlagen.

Die Aufgabe wird bei dem in Rede stehenden Mikrowellenmodul dadurch gelöst, dass sich der Chip (7) in einer Kavität (9) des Trägerelements (8) befindet.

## Beschreibung

Die Erfindung betrifft ein Mikrowellenmodul für ein nach dem Laufzeitverfahren arbeitendes Füllstandmessgerät, mit mindestens einem Chip zum Erzeugen und/oder Empfangen von Mikrowellensignalen und mit mindestens einem Trägerelement.

Bei einer Möglichkeit der Messung des Füllstands eines Mediums in einem Behälter werden Mikrowellensignale in die Richtung der Oberfläche ausgestrahlt und die dort reflektierten Signale empfangen. Aus der Zeit zwischen dem Absenden der Signale und dem Empfangen der reflektierten Signale - also insgesamt der Laufzeit - lässt sich der Abstand zwischen dem Messgerät und der Oberfläche des Mediums und daraus über bekannte Größen des Messaufbaus der Füllstand ermitteln. Daher wird das Messverfahren auch als Laufzeit- oder Radar-Verfahren bezeichnet. Weiterhin können andauernd Mikrowellensignale oder nur pulsweise erzeugt und abgestrahlt werden.

Entsprechende Messgeräte verfügen üblicherweise über eine Elektronikeinheit, die die Mikrowellensignale erzeugt bzw. verarbeitet, und ein Antennenelement, das beispielsweise die Mikrowellensignale frei abstrahlt oder entlang einer Leiterstruktur - z. B. ein Seil oder ein Stab - führt. Im Zusammenhang mit der Einkopplung auf bzw. das Auskoppeln der Signale von einem Leiter-auch als Sonde bezeichnet - wird auch die Bezeichnung Zeitbereichsreflektometrie (Time Domain Reflectometry, TDR) verwendet.

In der Elektronikeinheit befindet sich in vielen Ausgestaltungen ein Mikrowellenmodul mit einem Chip, der der Signalerzeugung und -auswertung bzw. -verarbeitung dient.

So beschreibt die US 8,269,666 B2 beispielsweise ein Mikrowellenmodul mit einem auf einer HF-Leiterplatte befindlichen Chip. Unter der Leiterplatte befindet sich in einer Ausgestaltung eine Metallisierung. Auf der Seite der Leiterplatte, auf der sich der Chip befindet, ist noch ein Gehäuse vorgesehen. Einen ähnlichen Aufbau zeigt auch die US 7,355,547 B2.

Im Zusammenhang mit ähnlichen Mikrowellenmodulen wird beispielweise in der Dissertation: "MCM Integration Technologies for 60-80 GHz Applications" von Janusz Grzyb, ETH Zürich, 2004, die Verwendung eines Kupferträgers als Wärmesenke unterhalb des Chips angegeben.

Einen Chip und ein diesen Chip tragendes Trägerelement lässt sich beispielsweise der Dissertation: "Methoden und Techniken zur Integration von 122 GHz Antennen in miniaturisierte Radarsensoren" von Stefan Beer, Karlsruhe, 2013, entnehmen. Dort werden auch Bonddrähte zur Verbindung des Chips mit der Oberseite des Trägerelements offenbart.

Für die Abstrahlung der Mikrowellensignale empfehlen sich beispielweise Hohlleiter.

Eine Anordnung mit einem Chip, der über einen Ringkoppler (bzw. einen Rat-Race-Koppler) mit einem Hohlleiter verbunden ist, wird beispielweise offenbart in dem Aufsatz "SIGE-SCHALTUNGEN - RADAR DER ZUKUNFT?" von Prof. Dr.-Ing. Nils Pohl, Jahresbericht 2012, Fraunhofer-Institut für Hochfrequenzphysik und Radartechnik FHR, Seiten 15 - 17.

Eine Anordnung mit einer Stabantenne zeigt beispielsweise die EP 2 219 045 B1.

Eine Ausgestaltung eines Antennenelements bestehend aus einem Durchbruch in einem Substrat sowie einer Schirmkappe zeigt die DE 102 43 671 B3.

Unterschiedliche Trägerelemente für Mikrowellenchips beschreibt beispielsweise die DE 601 31 643 T2.

Die Einkopplung der Signale in das Antennenelement zeigt beispielsweise die DE 10 2011 015 894 A1.

Der Erfindung liegt daher die Aufgabe zugrunde, ein möglichst vorteilhaftes Mikrowellenmodul für ein nach dem Laufzeitverfahren arbeitendes Füllstandmessgerät vorzuschlagen.

Das erfindungsgemäße Mikrowellenmodul, bei dem die zuvor hergeleitete und aufgezeigte Aufgabe gelöst ist, ist zunächst und im Wesentlichen dadurch gekennzeichnet, dass sich der Chip in einer Kavität des Trägerelements befindet. Der Chip sitzt daher nicht auf dem Trägerelement auf, sondern ist in einer Aussparung oder Vertiefung als Kavität eingesetzt.

Dabei sind in einer Ausgestaltung der Chip und die Kavität derartig ausgestaltet und aufeinander abgestimmt, dass zumindest eine die Kavität umgebende Oberseite des Trägerelements und eine der Oberseite des Trägerelements zugewandte Oberseite des Chips plan sind. In dieser Ausgestaltung befindet sich daher die Oberseite des Chips auf der gleichen Höhe wie wenigstens die Oberseite, die die Kavität, in der sich der Chip befindet, umschließt.

In einer ergänzenden oder alternativen Ausgestaltung sind der Chip und die Kavität derartig ausgestaltet und aufeinander abgestimmt, dass mindestens ein den Chip mit einer auf der Oberseite des Trägerelements befindlichen Leiterbahnstruktur verbindender Bonddraht eine Länge kleiner oder gleich 300 Mikrometer aufweist. Diese Ausgestaltung erlaubt es, dass die Anbindung des Chips für die Übertragung der Mikrowellensignale an eine Leiterbahnstruktur auf der Oberseite des Trägerelements derartig ist, dass mindestens ein Bonddraht als verbindendes Element zwischen Chip und Leiterbahnstruktur eine maximale Länge von 300 Mikrometer aufweist.

In einer weiteren Ausgestaltung sind zwei Bonddrähte vorgesehen, die jeweils eine einzelne Verbindung zu der Leiterbahnstruktur erzeugen und die ebenfalls jeweils eine maximale Länge von 300 Mikrometer aufweisen.

In einer Ausgestaltung ist der Chip mit mindestens einem Antennenelement verbunden.

In einer ergänzenden Ausgestaltung besteht das Antennenelement zumindest aus einem Hohlleiter im Trägerelement und einer den Hohlleiter funktional verlängernden Kappe. Der Hohlleiter hat in einer Ausgestaltung einen Durchmesser von 2,6 Millimeter. Das Antennenelement kann dabei funktional oder auch tatsächlich mit weiteren Antennenelementen verbunden sein.

In einer Ausgestaltung ist der Chip mit mindestens einem Ringkoppler verbunden. Der Ringkoppler befindet sich dabei in einer Ausgestaltung zwischen dem Chip und dem Antennenelement. In einer Ausgestaltung ist der Chip über zwei Bonddrähte, deren Länge kleiner oder gleich 300 Mikrometer ist, mit dem Ringkoppler verbunden. In einer Ausgestaltung hat jeder Bonddraht einen Durchmesser von 17 Mikrometer.

Das Trägerelement besteht in einer Ausgestaltung zumindest aus einem Kupferträger und einem dielektrischen Substrat. Das dielektrische Substrat bildet in einer Ausgestaltung die Oberseite des Trägerelements.

In einer ergänzenden Ausgestaltung ist in Verbindung mit einer vorgenannten Ausgestaltung des Antennenelements vorgesehen, dass sich unterhalb von mindestens einem Seitenteil der Kappe - und damit in dem Trägerelement - mindestens eine bis zu dem Kupferträger reichende Durchkontaktierung im Substrat des Trägerelements befindet. Eine Durchkontaktierung ist dabei eine im Wesentlichen vertikal verlaufende elektrische Verbindung zwischen einzelnen Lagen des Trägerelements. In einer Ausgestaltung ist eine - entsprechend ausgedehnte - Durchkontaktierung oder sind mehrere Durchkontaktierungen im gesamten Bereich unterhalb der Auflagefläche der Seitenteile der Kappe auf dem Trägerelement vorgesehen.

In einer Ausgestaltung ist der Hohlleiter nur im Kupferträger des Trägerelements befindlich und erstreckt sich daher nicht in den Bereich des dielektrischen Substrats.

Weiterhin liegt in einer Ausgestaltung die Kappe auf der Oberseite des Trägerelements dem Hohlleiter gegenüber. Die Kappe führt damit den Hohlleiter weiter und schließt ihn an einer Seite ab. In einer Ausgestaltung sind die Kappe und der Kupferträger elektrisch miteinander verbunden.

In einer Ausgestaltung ist vorgesehen, dass die Frequenz der von dem Chip erzeugten und/oder empfangenen Mikrowellensignale größer als 57 GHz ist und insbesondere zwischen 57 GHz und 64 GHZ oder zwischen 75 GHz und 85 GHz liegt.

Weiterhin bezieht sich die Erfindung auf ein nach dem Laufzeitverfahren arbeitendes Füllstandmessgerät, das ein Mikrowellenmodul nach mindestens einem der vorgenannten Ausgestaltungen aufweist.

Im Einzelnen gibt es eine Vielzahl von Möglichkeiten, das erfindungsgemäße Mikrowellenmodul auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine schematische Darstellung einer Füllstandmessung,
- Fig. 2: eine Draufsicht auf ein schematisch dargestelltes Mikrowellenmodul und
- Fig. 3: einen Schnitt durch eine weiteres Mikrowellenmodul.

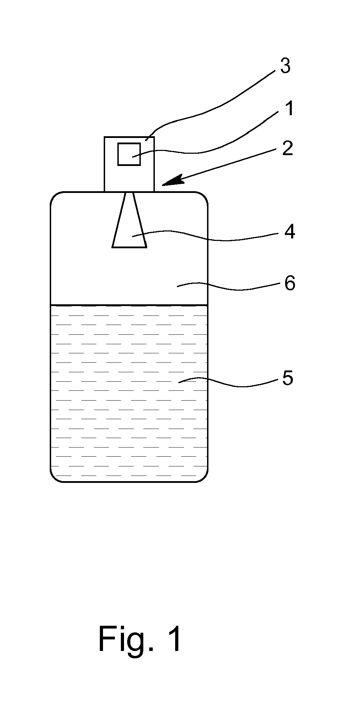

In der Fig. 1 ist rein schematisch die Anwendung eines Mikrowellenmoduls 1 als Teil eines Füllstandmessgeräts 2 dargestellt. Das Mikrowellenmodul 1 gehört zur Elektronikeinheit 3. Für das Abstrahlen und Empfangen der Mikrowellensignale, deren Frequenz im Bereich um 80 GHz liegt, ist eine Hornantenne 4 vorgesehen.

Über die Laufzeit der ausgestrahlten und nach der Reflexion an der Oberfläche des Mediums 5 wieder empfangenen Mikrowellensignale lässt sich der Füllstand des Mediums 5 in dem Behälter 6 ermitteln. Die Messung erfolgt also insgesamt nach dem Laufzeit- oder Radar-Verfahren.

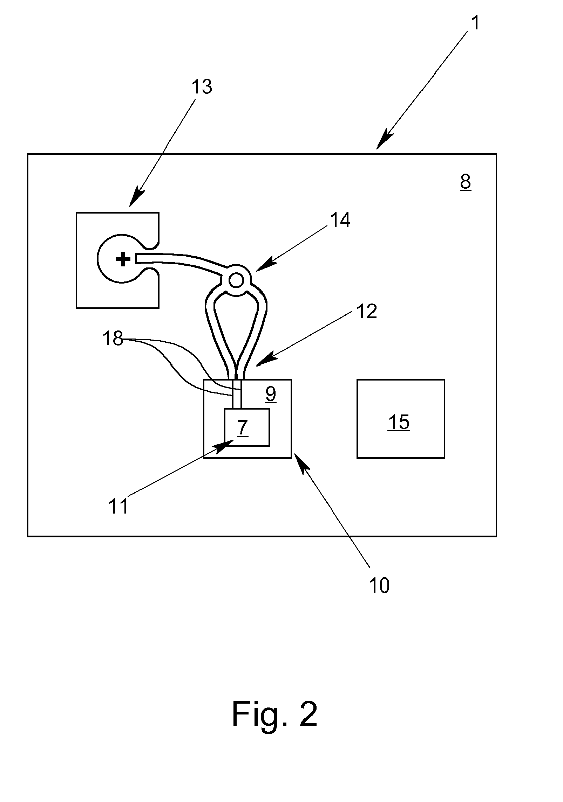

Die Fig. 2 zeigt einen Draufblick auf das Mikrowellenmodul 1, wobei für die Übersichtlichkeit eine Beschränkung der dargestellten Komponenten vorgenommen wurde.

Der Schwerpunkt liegt auf der Befestigung und der Ankopplung des Chips 7, der die Mikrowellensignale generiert bzw. empfängt und auswertet bzw. so verarbeitet, dass sie einer weiteren Auswertung durch - hier nicht dargestellte - weitere Komponenten zugänglich sind. Eine alternative Bezeichnung für den Chip 7 wäre MMIC (Monolithic Microwave Integrated Circuit) oder ASIC (Application Specific Integrated Circuit).

Für den Chip 7 ist das Trägerelement 8 vorgesehen, in dem sich hier eine Kavität 9 befindet. In der Kavität 9 als Hohlraum oder Vertiefung ist der Chip 7 eingesetzt. Die Tiefe der Kavität 9 ist dabei derartig in Abhängigkeit von der Dimensionierung des Chips 7 gewählt, dass die Oberseite 10 des Trägerelements 8 und die Oberseite 11 des Chips 7 plan zueinander sind. Das bedeutet, dass der Chip 7 weder über die Oberseite 10 des Trägerelements 8 herausragt, noch zurückgesetzt bzw. tiefer liegt.

Die plane Anordnung hat insbesondere den Zweck, die Verbindung zwischen dem Chip 7 und der Leiterbahnstruktur 12 auf dem Trägerelement 8 hin zum Antennenelement 13 möglichst kurz ausführen zu können. Die direkte Ankopplung des Chips 7 - für die Übertragung der Mikrowellensignale - an die Leiterbahnstruktur 12 erfolgt hier über zwei Bonddrähte 18.

Die zwei kritischen Bonddrähte 18 koppeln die 80 GHz-Mikrowellensignale vom Chip 7 auf die Leiterbahnstruktur 12, die sich auf der Oberseite 10 des Trägerelements 8 befindet. Bei einer Frequenz im Bereich von 80 GHz sollten insbesondere parasitäre Effekte vermieden werden, die sich daraus ergeben, dass ein Bonddraht bei einer solchen Frequenz als Induktivität fungiert und gleichzeitig kapazitiv auf einen - insbesondere parallel oder benachbart angeordneten - Bonddraht überkoppelt. Dies führt zu einem Verlust an Leistung. Betrachtet werden muss daher insbesondere die Leistungsanpassung, die abhängig von der Länge der Bonddrähte ist. Daher ist eine Verkürzung der Länge der Bonddrähte 18 wichtig, was hier durch den reduzierten Abstand zwischen dem Chip 7 und der Leiterbahnstruktur 12 auf der Oberseite 10 des Trägerelements 8 ermöglicht ist.

Zwischen dem Antennenelement 13 und dem Chip 7 ist ein Ringkoppler 14 vorgesehen. Der Ringkoppler 14 - andere Bezeichnungen sind Rat-Race-Koppler oder 180°-Hybrid - ist ein Richtkoppler, der sich durch seine Kenndaten sowie Einfachheit auszeichnet.

Insgesamt werden die Mikrowellensignale vom Chip 7 differentiell über die zwei Bonddrähte 18 auf die Leiterbahnstruktur 12 gegeben und durch den Ringkoppler 14 in Single-Ended-Signale umgewandelt und dann entsprechend über eine Leiterbahn in das Antennenelement 13 eingekoppelt.

Weiterhin ist hier rein beispielhaft ein SMD-Bauteil 15 angedeutet. Durch dieses und weitere - hier nicht dargestellte - Bauteile wird die Funktion des Mikrowellenmoduls 1 sichergestellt, z. B. Energieversorgung, Steuerung des Moduls 1 usw.

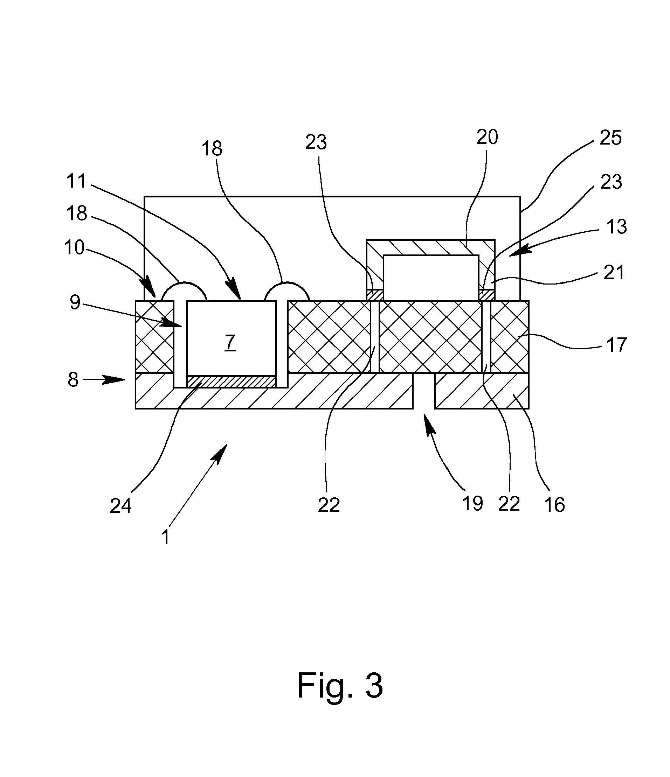

In der Fig. 3 ist ein Schnitt durch eine leicht veränderte Variante eines Mikrowellenmoduls 1 dargestellt. Der prinzipielle Aufbau deckt sich jedoch mit dem des in der Fig. 2 dargestellten Mikrowellenmoduls 1.

Das Trägerelement 8 setzt sich zusammen aus einem Kupferträger 16 (hier ist dies eine 1 mm dicke Kuperschicht) und aus einem dielektrischen Substrat 17, das beispielsweise aus einem glasfaserverstärkten Kunststofflaminat besteht. Das Substrat 17 bildet dabei die Oberseite 10 des Trägerelements 8.

Zu erkennen ist, dass die Kavität 9 derartig ausgestaltet ist, dass die Oberseite 11 des Chips 7 und die Oberseite 10 des Trägerelements 8 plan abschließen. Dies erlaubt es, dass die Bonddrähte 18 zur Anbindung des Chips 7 an die Leiterbahnstruktur auf der Oberseite 10 des Trägerelements 8 hinreichend kurz und hier insbesondere mit einer maximalen Länge von 300 Mikrometern ausgeführt werden kann. In dem gezeigten Beispiel hat der Chip eine Höhe von ca. 190 Mikrometer und das Substrat 17 eine Dicke von 127 Mikrometer.

Weiterhin ist zu erkennen, dass sich das Antennenelement 13 aus einem Hohlleiter 19 als Aussparung im Kupferträger 16 und einer Kappe 20 auf der Oberseite 10 des Trägerelements 8 zusammensetzt. Die Kappe 20 bildet dabei die funktionale Verlängerung des Hohlleiters 19 und ist so angeordnet, dass sich der Hohlleiter 19 mittig darunter befindet. Der Hohlleiter 19 hat hier einen Durchmesser von 2,6 Millimetern.

Die Ein- bzw. Auskopplung der Mikrowellensignale erfolgt dabei - wie in der

Fig. 2 zu erkennen - durch eine Leiterbahn, die im Bereich des Hohlleiters 19 mündet.

Der Hohlleiter 19 erstreckt sich über den Bereich des Kupferträgers 16 und endet vor dem Substrat 17. Die Kappe 20 ist mit ihren Seitenteilen 21 vollumfänglich auf der Oberseite 10 des Trägerelements 8 aufgesetzt und ist durch Durchkontaktierungen 22, die bis zu den Seitenteilen 21 reichen, mit dem Kupferträger 16 elektrisch verbunden bzw. kontaktiert.

Insgesamt ergibt sich das Antennenelement 13, das beispielsweise in die in der Fig. 1 dargestellte Antenne übergeht, aus dem Hohlleiter 19, den Durchkontaktierungen 22 und der Kappe 20. Dabei sind die Kappe 20 und die Durchkontaktierungen 22 elektrisch leitend mit dem Kupferträger 16 verbunden, in dem sich der Hohlleiter 19 als Aussparung befindet.

Um die hier geschlossene und becherförmige Kappe 20 zu befestigen, ist ein leitfähiger Kleber 23 vorgesehen, der ebenfalls der elektrischen Verbindung mit dem Kupferträger 16 dient.

Weiterhin ist noch zu erkennen, dass der Chip in der Kavität 9 auf einem Kleberpolster 24 ruht, was bei der Vorgabe der Tiefe der Kavität 9 ebenfalls relevant ist.

Die Elemente auf der Oberseite 10 des Trägerelements 8 werden schließlich noch von einem Deckel 25 gegenüber mechanischer Belastung geschützt. Der Deckel 25 dient dabei auch als Hochfrequenz-Abschirmung.

## Patentansprüche

1. Mikrowellenmodul (1) für ein nach dem Laufzeitverfahren arbeitendes Füllstandmessgerät (2), mit mindestens einem Chip (7) zum Erzeugen und/oder Empfangen von Mikrowellensignalen und mit mindestens einem Trägerelement (8),
**dadurch gekennzeichnet,**
**dass** sich der Chip (7) in einer Kavität (9) des Trägerelements (8) befindet.

2. Mikrowellenmodul (1) nach Anspruch 1, **dadurch gekennzeichnet, dass** der Chip (7) und die Kavität (9) derartig ausgestaltet und aufeinander abgestimmt sind, dass zumindest eine die Kavität (9) umgebende Oberseite (10) des Trägerelements (8) und eine der Oberseite (10) des Trägerelements (8) zugewandte Oberseite (11) des Chips (7) plan sind.

3. Mikrowellenmodul (1) nach Anspruch 1 oder 2, **dadurch gekennzeichnet, dass** der Chip (7) und die Kavität (9) derartig ausgestaltet und aufeinander abgestimmt sind, dass mindestens ein den Chip (7) mit einer auf der Oberseite (10) des Trägerelements (8) befindlichen Leiterbahnstruktur (12) verbindender Bonddraht (18) eine Länge kleiner oder gleich 300 Mikrometer aufweist.

4. Mikrowellenmodul (1) nach einem der Ansprüche 1 bis 3, **dadurch gekennzeichnet, dass** der Chip (7) mit mindestens einem Antennenelement (13) verbunden ist.

5. Mikrowellenmodul (1) nach Anspruch 4, **dadurch gekennzeichnet, dass** das Antennenelement (13) zumindest aus einem Hohlleiter (19) im Trägerelement (8) und einer den Hohlleiter (19) funktional verlängernden Kappe (20) besteht.

6. Mikrowellenmodul (1) nach einem der Ansprüche 1 bis 5, **dadurch gekennzeichnet, dass** der Chip (7) mit mindestens einem Ringkoppler (14) verbunden ist.

7. Mikrowellenmodul (1) nach einem der Ansprüche 1 bis 6, **dadurch gekennzeichnet, dass** das Trägerelement (8) zumindest aus einem Kupferträger (16) und einem - insbesondere eine Oberseite (10) des Trägerelements (8) bildenden - dielektrischen Substrat (17) besteht.

8. Mikrowellenmodul (1) nach Anspruch 7, **dadurch gekennzeichnet, dass** sich unterhalb von mindestens einem Seitenteil (21) der Kappe (20) mindestens eine bis zu dem Kupferträger (16) reichende Durchkontaktierung (22) im Substrat (17) des Trägerelements (8) befindet.

9. Mikrowellenmodul (1) nach Anspruch 7 oder 8, **dadurch gekennzeichnet, dass** der Hohlleiter (19) nur im Kupferträger (16) des Trägerelements (8) befindlich ist und/oder dass die Kappe (20) auf der Oberseite (10) des Trägerelements (8) dem Hohlleiter (19) gegenüberliegt.

10. Mikrowellenmodul (1) nach einem der Ansprüche 1 bis 9, **dadurch gekennzeichnet, dass** die Frequenz der von dem Chip (7) erzeugten und/oder empfangenen Mikrowellensignale größer als 57 GHz ist.
